(19) **Europäisches Patentamt**
**European Patent Office**
**Office européen des brevets**

(11) **EP 4 707 757 A1**

(12) **EUROPEAN PATENT APPLICATION**

(43) Date of publication:
**11.03.2026 Bulletin 2026/11**

(21) Application number: **24198973.0**

(22) Date of filing: **06.09.2024**

(51) International Patent Classification (IPC):
**G01J 3/45** $^{(2006.01)}$     **G01J 3/28** $^{(2006.01)}$
**G01J 3/453** $^{(2006.01)}$

(52) Cooperative Patent Classification (CPC):
**G01J 3/45; G01J 3/2823;** G01J 2003/2813;
G01J 2003/4538

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Ludwig-Maximilians-Universität
München, in
Vertretung des Freistaates Bayern**
**80539 München (DE)**

(72) Inventors:
• **Schröder, Jakob**
**85748 Garching b. München (DE)**
• **Döpp, Andreas**
**85748 Garching b. München (DE)**

(74) Representative: **v. Bezold & Partner
Patentanwälte - PartG mbB
Ridlerstraße 57
80339 München (DE)**

(54) **SPECTRUM DATA RECONSTRUCTION METHOD AND APPARATUS FOR RECONSTRUCTING SPECTRALLY RESOLVED SPECTRUM DATA**

(57)     A spectrum data reconstruction method for reconstructing spectrally resolved spectrum data (5) of a measuring light field from sensor data ($F_\tau$) provided by an interferometric autocorrelation measurement of interferogram data created by pairwise superimposing delayed versions of the measuring light field, said delayed versions of the measuring light field having different mutual delays ($\tau$), comprises the steps of providing a spectral system matrix ($R_{\tau\omega}$), wherein the sensor data ($F_\tau$) are determined by applying the spectral system matrix ($R_{\tau\omega}$) to the spectrum data ($S_\omega$) to be obtained, said spectral system matrix ($R_{\tau\omega}$) being created in dependency on the delays ($\tau$) and instrument parameters of an spectrometer apparatus employed for the interferometric autocorrelation measurement, providing an initial prior estimate ( $\mu_S^{prior}$ ) and an initial prior covariance ( $\Sigma_S^{prior}$ ) of the spectrum data (5), calculating a mean estimate ($\mu_S$) and a covariance ($\Sigma_S$) of the spectrum data ($S_\omega$) by applying a Bayesian inference computation employing the sensor data ($F_\tau$), the spectral system matrix ($R_{\tau\omega}$), the initial prior estimate ( $\mu_S^{prior}$ ) the initial prior covariance ( $\Sigma_S^{prior}$ ) and the initial prior covariance ( $\Sigma_S^{prior}$ ), and output of the mean estimate ($\mu_S$) and optionally the covariance ($\Sigma_S$) of the spectrum data ($S_\omega$) as the spectrum data (5) to be reconstructed. Furthermore, an interferometric autocorrelation measurement method, a spectrum data reconstruction apparatus and an interferometric autocorrelation measurement apparatus are described.

FIG. 1

## Description

<u>Field of the invention</u>

The invention relates to a spectrum data reconstruction method for reconstructing spectrally resolved spectrum data of a measuring light field, an interferometric autocorrelation measurement method including the spectrum data reconstruction method, a spectrum data reconstruction apparatus for reconstructing spectrally resolved spectrum data of a measuring light field, and an interferometric autocorrelation measurement apparatus including the spectrum data reconstruction apparatus. Applications of the invention are available e.g., in the field of spectroscopy, e.g., Fourier Transform Spectroscopy.

<u>Technical background</u>

In the present specification, reference is made to the following prior art illustrating technical background of the invention and related techniques:

[1] P. Jacquinot. New developments in interference spectroscopy. Reports on Progress in Physics, 23(1):267, 1960;
[2] Claude E. Shannon. Communication in the presence of noise. Proceedings of the IRE, 37(1):10-21, 1949;
[2] P. Fellgett. The theory of infrared sensitivities and its application to investigations of stellar radiation in the near infra-red. Ph. D. thesis, Univ. of Cambridge, 1958;
[4] P. Jacquinot. New developments in interference spectroscopy. Reports on Progress in Physics, 23(1):267, 1954;
[5] Peter R. Griffiths et al. Fourier transform infrared spectrometry. John Wiley & Sons, 2007;
[6] Siegfried Wartewig et al. Ir and raman spectroscopy: fundamental processing. Advanced drug delivery reviews, 57(8):1144-1170, 2005;
[7] David WT Griffith et al. Ftir remote sensing of biomass burning emissions of co2, co, ch4, ch2o, no, no2, nh3, and n2o. Global biomass burning: Atmospheric, climatic, and biospheric implications, pages 230-239, 2012;
[8] Matthew J Baker et al. Using fourier transform ir spectroscopy to analyze biological materials. Nature protocols, 9(8):1771-1791, 2014;
[9] David A Naylor et al. Interpolation of aliased spectra. Optics express, 15(20):12941-12957, 2007;
[10] Edwin T Jaynes et al. Probability theory: The logic of science. Cambridge university press, 2003;
[11] Devinderjit Sivia et al. Data analysis: a Bayesian tutorial. OUP Oxford, 2006;
[12] Phil Gregory. Bayesian logical data analysis for the physical sciences: a comparative approach with Mathematica® support. Cambridge University Press, 2005; and
[13] Stefan Schmuck et al. Fourier spectroscopy: A Bayesian way. International Journal of Spectroscopy, 2017:1-29, 2017.

It is generally known that Fourier Transform Spectroscopy (FTS) is a well-established technique for obtaining high-resolution spectra across a wide range of the electromagnetic spectrum. The core principle of FTS is the measurement of the interference pattern (interferogram) produced by combining a light beam with a delayed version of itself. This interference pattern is then Fourier transformed to obtain the spectrum of the light source, as described in the seminal work by Jacquinot (1960) [1]. Traditional FTS relies on the measurement of light intensity as a function of optical path difference (delay), with uniform sampling of the interferogram at intervals determined by the Nyquist-Shannon sampling theorem [2]. The spectrum is then obtained by applying the Fourier transform to convert the time-domain interferogram to a frequency-domain spectrum.

FTS has found widespread application in infrared spectroscopy, where it is commonly known as Fourier Transform Infrared Spectroscopy (FTIR). The popularity of FTIR is largely due to two key advantages. The first is Fellgett's advantage, also known as the multiplex advantage, which arises from the fact that all wavelengths are measured simultaneously, leading to a significant improvement in signal-to-noise ratio compared to scanning dispersive techniques [3]. The second is Jacquinot's advantage, or the throughput advantage, which allows FTS instruments to achieve much higher optical throughput than dispersive spectrometers, as they don't require narrow slits for high resolution [4].

These advantages have made FTIR a powerful tool in a wide range of applications. In chemistry and materials science, FTIR is used for molecular structure determination and polymer characterization [5]. The pharmaceutical industry employs FTIR for quality control and counterfeit detection medical field, it has applications in diagnostics and tissue imaging [8].

Fourier Transform Spectroscopy principles have been extended to enable imaging spectroscopy, contributing significantly to hyperspectral imaging. In imaging FTS, a separate FTS measurement is performed for each pixel on a camera sensor. This is typically achieved by coupling an imaging system to an interferometer. As the optical path difference is varied, a series of images is captured. The intensity variations of each pixel across this series form an interferogram, which is then Fourier transformed to obtain a spectrum for each spatial point.

This approach results in a three-dimensional data cube ($x$, $y$, $\lambda$) where $x$ and $y$ are spatial coordinates and $\lambda$ represents wavelength. Imaging FTS maintains the high spectral resolution characteristic of FTS while providing spatial information. It has found applications in remote sensing for atmospheric studies and Earth observation, biomedical imaging for tissue analysis, and industrial quality control for mapping chemical compositions. The technique's flexibility in spectral range and resolution makes it adaptable to various scenarios, from broad spectral surveys to detailed studies of narrow spectral features.

While highly effective, the traditional FTS approach has limitations. It doesn't easily incorporate prior knowledge about the spectrum, requires uniform sampling, and provides no information about the uncertainty in the spectral estimate. These limitations have been recognized in the literature, with efforts to address them through various computational techniques [9]. Overcoming these limitations could significantly enhance the performance of FTS in all the aforementioned applications, potentially enabling faster measurements, higher resolution, or improved performance in challenging measurement conditions.

Bayesian inference is a generally known statistical method that updates the probability of a hypothesis as more evidence becomes available. Bayesian inference is based on Bayes' theorem, which relates the conditional and marginal probabilities of random events [10]. Prior approaches to spectral analysis using Bayesian methods have been limited in scope, e.g. infering single frequencies of periodic signals [12]. More extensive modeling of spectral parameters was done by Schmuck and Svensson (2007) [13], but was focused on finding the best hyperparameters for a specific type of interferometer realization. Most importantly they relied on specialized assumptions not generalizable to broader spectroscopic applications, like a Brownian bridge prior, whose structure does not harness the effectiveness of prior knowledge incorporation within the Bayesian framework.

Objective of the invention

It is an objective of the invention to provide an improved spectrum data reconstruction method for reconstructing spectrally resolved spectrum data of a measuring light field, interferometric autocorrelation measurement method, spectrum data reconstruction apparatus for reconstructing spectrally resolved spectrum data of a measuring light field and/or interferometric autocorrelation measurement apparatus, being capable of avoiding limitations and disadvantages of conventional techniques. In particular, reconstructing spectrally resolved spectrum data of a measuring light field is to be improved in terms of reconstruction precision, reconstruction speed, reconstruction resolution, capability of introducing prior knowledge about the spectrum data, allowing uniform or non-uniform sampling, and/or providing information about the uncertainty in the spectral estimate.

Summary of the invention

This objective is solved by a spectrum data reconstruction method for reconstructing spectrally resolved spectrum data of a measuring light field, an interferometric autocorrelation measurement method, a spectrum data reconstruction apparatus for reconstructing spectrally resolved spectrum data of a measuring light field and/or an interferometric autocorrelation measurement apparatus comprising the features of the independent claims. Advantageous embodiments and applications of the invention are defined in the dependent claims.

According to a first general aspect of the invention, the above objective is solved by a spectrum data reconstruction method for reconstructing spectrally resolved spectrum data (S) (in particular: computing a spectral estimate) of a measuring light field from sensor data ($F_\tau$) provided by an interferometric autocorrelation measurement of interferogram data (interferograms) each being created by pairwise superimposing delayed versions of the measuring light field, said delayed versions of the measuring light field having different mutual delays ($\tau$). The term spectrum data refers to a data set representing a spectrum, e.g., an absorption, transmission and/or emission radiation spectrum, of a sample to be investigated. The measuring light field is a light field created by an interaction of the sample with measuring light.

According to the invention, a spectral system matrix ($R_{\tau\omega}$) is provided, wherein the sensor data ($F_\tau$) are determined by applying the spectral system matrix ($R_{\tau\omega}$) to the spectrum data ($S_\omega$) to be obtained, said spectral system matrix ($R_{\tau\omega}$) being created in dependency on the delays ($\tau$) and instrument parameters of a spectrometer apparatus employed for the interferometric autocorrelation measurement.

Furthermore, according to the invention, an initial prior estimate ( $\mu_S^{prior}$ ) and an initial prior covariance ( $\Sigma_S^{prior}$ ) of the spectrum data (S) are provided. This prior information may be provided e.g., on the basis of earlier comparable reference measurements, numerical simulations and/or by initial default estimates.

Furthermore, according to the invention, a mean estimate ($\mu_S$) and a covariance ($\Sigma_S$) of the spectrum data ($S_\omega$) are calculated by applying a Bayesian inference computation employing the sensor data ($F_\tau$), the spectral system matrix

($R_{\tau\omega}$), the initial prior estimate ($\mu_S^{prior}$) the initial prior covariance ($\Sigma_S^{prior}$) and the initial prior covariance ($\Sigma_S^{prior}$), and the mean estimate ($\mu_S$) and optionally the covariance ($\Sigma_S$) of the spectrum data ($S_\omega$) are output as the spectrum data (S) to be reconstructed. Output of both of the mean estimate ($\mu_S$) and the covariance ($\Sigma_S$) may be preferred for providing all available information on the measurement. Alternatively, output of the mean estimate ($\mu_S$) may be sufficient fir characterizing the sample to be investigated.

According to a second general aspect of the invention, the above objective is solved by an interferometric autocorrelation measurement method, comprising the steps of providing a measuring light field, measuring sensor data ($F_\tau$) by an interferometric autocorrelation measurement of interferogram data created by pairwise superimposing delayed versions of the measuring light field, said delayed versions of the light field having different mutual delays ($\tau$), and applying the spectrum data reconstruction method according to the first general aspect of the invention, or an embodiment thereof, to the sensor data ($F_\tau$).

According to a third general aspect of the invention, the above objective is solved by a spectrum data reconstruction apparatus being configured for reconstructing spectrally resolved spectrum data (S) of a measuring light field from sensor data ($F_\tau$) provided by an interferometric autocorrelation measurement of interferogram data created by pairwise superimposing delayed versions of the measuring light field, said delayed versions of the measuring light field having different mutual delays ($\tau$).

According to the invention, the spectrum data reconstruction apparatus includes a data processing device being configured for providing a spectral system matrix ($R_{\tau\omega}$), wherein the sensor data ($F_\tau$) are determined by applying the spectral system matrix ($R_{\tau\omega}$) to the spectrum data ($S_\omega$) to be obtained, said spectral system matrix ($R_{\tau\omega}$) being created in dependency on the delays ($\tau$) and instrument parameters of an spectrometer apparatus employed for the interferometric autocorrelation measurement, providing an initial prior estimate ($\mu_S^{prior}$) and an initial prior covariance ($\Sigma_S^{prior}$) of the spectrum data (S), calculating a mean estimate ($\mu_S$) and a covariance ($\Sigma_S$) of the spectrum data ($S_\omega$) by applying a Bayesian inference computation employing the sensor data ($F_\tau$), the spectral system matrix ($R_{\tau\omega}$), the initial prior estimate ($\mu_S^{prior}$) the initial prior covariance ($\Sigma_S^{prior}$) and the initial prior covariance ($\Sigma_S^{prior}$), and output of the mean estimate ($\mu_S$) of the spectrum data ($S_\omega$) and optionally the covariance ($\Sigma_S$) as the spectrum data (S) to be reconstructed.

Preferably, the spectrum data reconstruction apparatus may be configured for executing the spectrum data reconstruction method according to the first general aspect of the invention or an embodiment thereof.

According to a fourth general aspect of the invention, the above objective is solved by an interferometric autocorrelation measurement apparatus being configured for measuring spectrally resolved spectrum data (S) of a measuring light field, comprising a measuring device including a sensor device being arranged for providing sensor data (F$\tau$) provided by an interferometric autocorrelation measurement of interferogram data created by pairwise superimposing delayed versions of the measuring light field, said delayed versions of the measuring light field having different mutual delays ($\tau$), and the spectrum data reconstruction apparatus according to the third general aspect of the invention or an embodiment thereof.

Further independent subjects of the invention comprise a computer-implemented device programmed to perform the method according to the first general aspect of the invention or an embodiment thereof, and a computer program product which, when loaded into a computer-implemented device, executes the method according to the first general aspect of the invention, or an embodiment thereof. The computer-implemented device may be integrated in a measuring device or may be provided as a separate computer unit.

Advantageously, the inventors have found a computational method for enhancing efficiency in spectroscopic applications, particularly in the domain of FTS. This method, also termed as Bayesian Autocorrelation Spectroscopy (BAS), applies principles of Bayesian inference and information theory to the process of spectral reconstruction from interferometric measurements.

With the invention, the above limitations of conventional techniques are addressed by applying Bayesian inference. The inventors have found that the combination of calculating spectrally resolved image data via solving the inverse problem through applying the regularized inversion (applying the spectral system matrix) with applying Bayesian methods provides multiple advantages. In particular, the invention allows incorporating prior knowledge about the spectrum, handling non-uniform sampling naturally, providing quantitative measures of uncertainty in the spectral estimate, and enabling adaptive sampling strategies based on information theory [11]. BAS is employed for implementing the FTS process as a sequential Bayesian update (one update step or multiple update steps), providing a probabilistic framework for spectral estimation. In particular, the inventors, employing Gaussian assumptions for both the prior and likelihood distributions in Bayesian inference, have found the formulation of closed-form update equations for the mean and covariance of the spectral estimate, allowing an efficient numerical calculation, in particular wit a step-wise refinement of the spectral estimate.

As a further substantial advantage, the invention can be applied to existing FTS setups to improve their performance without requiring hardware modifications. It also provides a foundation for developing new, more efficient spectroscopic instruments by enabling information-theoretic optimization of sampling strategies.

The combination of FTS principles with Bayesian inference forms the foundation for this invention, aiming to enhance spectral resolution and measurement efficiency in spectroscopic applications. This approach builds upon recent advancements in Bayesian spectral analysis [12], and extends them to the specific context of Fourier transform spectroscopy. By doing so, it is capable of extending the boundaries of what is achievable in spectroscopic measurements across a wide range of scientific and industrial applications.

Advantageously, the mean estimate ($\mu_S$) providing the (most) probable spectrum and the covariance ($\Sigma_S$) providing information about the uncertainty and how this uncertainty correlates between different spectral channels of the spectrum data are calculated. The covariance represents an error estimate of the reconstruction, resulting in a substantial advantage over conventional techniques.

According to a preferred embodiment of the invention, the spectrum data reconstruction method may include further steps of repeatedly calculating an updated mean estimate ($\mu_S$) and an updated covariance ($\Sigma_S$) of the spectrum data ($S_\omega$) by applying the Bayesian inference computation, wherein for each update calculation a previously calculated mean estimate ($\mu_S$) and covariance ($\Sigma_S$) of the spectrum data ($S_\omega$) are employed as a current prior estimate ( $\mu_S^{prior}$ ) and a current prior covariance ( $\Sigma_S^{prior}$ ), and after termination of the repeatedly updating steps, output of the updated mean estimate ($\mu_S$) and optionally the updated covariance ($\Sigma_S$) of the spectrum data ($S_\omega$) as the spectrum data (S) to be reconstructed.

Advantageously, the closed-form update equations for the mean and covariance of the spectral estimate allow for the continuous refinement of the spectral estimate, e.g., as new measurements are taken, incorporating both the new data and the existing uncertainty in the estimate. Termination of the repeatedly updating steps may be set in dependency on particular application conditions by a predetermined termination criterion, e.g., by comparing the covariance with a predetermined reference value or testing the number of iterations.

According to a particularly preferred embodiment of the invention, the spectrum data reconstruction method may include further steps of calculating multiple values of an information gain for potential delay values using the calculated covariance ($\Sigma_S$) of the spectrum data ($S_\omega$), and output of a selected delay value ($\tau_{next}$) which provides a maximum value of the information gain.

In terms of the interferometric autocorrelation measurement method of the invention, the multiple values of the information gain may be calculated for potential delay values using the calculated covariance ($\Sigma_S$) of the spectrum data ($S_\omega$), and the selected delay value ($\tau_{next}$) which provides the maximum value of the information gain, is employed for measuring subsequent sensor data ($F_\tau$).

Accordingly, this embodiment of the invention provides a framework for quantifying the information content of each measurement. This enables an adaptive sampling strategy, where the next measurement delay can be chosen to maximize the expected information gain. Such strategies have the advantageous potential to significantly reduce the number of measurements required for a given spectral resolution, thereby improving the efficiency of spectroscopic techniques.

According to a further advantageous embodiment of the invention, the spectrum data reconstruction method may include a further step of calculating a Fourier transform of the sensor data ($F_\tau$) for obtaining a Fourier estimate ( $\mu_S^{Fourier}$ ) of the spectrum data ($S_\omega$), wherein the mean estimate ($\mu_S$) and optionally the covariance ($\Sigma_S$) of the spectrum data ($S_\omega$) is calculating by applying the Bayesian inference computation further employing the Fourier estimate ( $\mu_S^{Fourier}$ ). Advantageously, the Fourier transform of the sensor data ($F_\tau$) provides an additional prior information improving the result of the Bayesian inference computation

Advantageously, multiple variants are available for providing the initial prior estimate ( $\mu_S^{prior}$ ) and the initial prior covariance ( $\Sigma_S^{prior}$ ). One or more of the variants may be selected depending on the application conditions of the invention. According to preferred variants, a reference database of relevant spectra, data of previously measured spectra, e.g., of similar samples, and/or measuring light source characteristics, e.g., for absorption experiments, may be employed as sources of the prior information.

According to a further preferred embodiment of the spectrum data reconstruction method, the step of providing the initial prior estimate ( $\mu_S^{prior}$ ) may include providing multiple different model prior estimates ( $\mu_{model}^{prior}$ ) a step of prior model averaging the model prior estimates ( $\mu_{model}^{prior}$ ), comprising at least one of calculating weights for each model prior estimate ( $\mu_{model}^{prior}$ ) based on a Leave-One-Out Cross-Validation (LOO-CV) score, and calculating weighted average of spectral estimates from the model prior estimates ( $\mu_{model}^{prior}$ ).

The invention can be applied for reconstructing spectrally resolved spectrum data of a measuring light field collected with a conventional spectrometer setup, like a FTS device, in particular including a single photosensor element. Advantageously, the application of the invention may be extended to imaging measurements. Accordingly, the sensor data ($F_\tau$) may comprise spatially resolved sensor data measured with multiple sensor elements (pixels) of a two-dimensional photosensor, and the spectrally resolved spectrum data (S) may be separately reconstructed for each of the sensor elements.

In summary, the present invention is capable of enhancing the capabilities of e.g., Fourier Transform Spectroscopy (FTS) through the application of Bayesian inference methods. The invention allows to incorporate prior knowledge about the spectrum into the reconstruction process, allowing for more robust results in challenging measurement conditions, provides quantitative uncertainty estimates for spectral reconstructions, enhancing the reliability of spectroscopic measurements, enables efficient non-uniform and adaptive sampling strategies to reduce measurement time and data acquisition requirements, and develops a flexible framework that can be applied to both existing FTS setups and guide the design of new, more efficient spectroscopic instruments. By these advantages, the invention substantially advances the field of spectroscopy, offering improved performance and new capabilities across a wide range of scientific and industrial applications that rely on high-resolution spectral analysis.

Brief description of the drawings

Further advantages and details of the invention are described in the following with reference to the attached drawings, which schematically show in:

Figures 1 to 3: flowcharts illustrating embodiments of quantifying a probability of the spectrally resolved image data; and

Figure 4: features of embodiments of the interferometric autocorrelation measurement apparatus including the spectrum data reconstruction apparatus of the invention.

Detailed description of preferred embodiments of the invention

Features of preferred embodiments of the invention are described in the following with particular reference to the data processing and mathematical background thereof. Details of designing the measuring part of the interferometric autocorrelation measurement apparatus for providing the light field sensor data and/or controlling components of the interferometric autocorrelation measurement apparatus, like an autocorrelation device (e.g., an interferometer), imaging optics and/or a photosensor device, are not described as far as they are known per se from conventional techniques, e.g., from FTS techniques. As an alternative to employing the invention for processing light field sensor data collected with FTIR spectrometry, other measuring principles may be used for providing the light field sensor data, e.g., as described in the European patent application EP 24198926.8 ("Optical imaging apparatus and spectral imaging method for creating spectrally and spatially resolved image data", not published on the priority day of the present specification). In particular with regard to the collection of light field sensor data and the relation between a spectral range of interest and a spectral resolution of interest and the delay and the interval of delay variation employed in an autocorrelation measurement, the application EP 24198926.8 is introduced to the present specification by reference. Calculations are implemented based on discretized sensed data as known per se from conventional numerical techniques.

Exemplary reference is made to embodiments, wherein a series of updates of the mean estimate and covariance are provided for iteratively improving the reconstruction result. It is emphasized that the invention is not restricted to these multiple updates embodiment, but rather can be implemented with a single update only, e.g., if a particularly fast reconstruction is intended, the result of the single update reconstruction is sufficient and/or the prior match the result quite well.

Mathematical formulation

In traditional FTS, the measured interferogram $I(\tau)$ for a given optical path difference $\tau$ is given by:

$$I(\tau) = \int_{-\infty}^{\infty} S(\omega)[1 + \cos(\omega\tau)]d\omega \tag{1}$$

where $S(\omega)$ is the spectrum to be estimated. The spectrum can be derived by applying the Fourier transform to the interferogram:

$$S(\omega) = \mathcal{F}\{I(\tau) - I(0)\} \tag{2}$$

This conventional approach imposes limitations on the spectral range and resolution:

$$\Delta\omega_{max} = \frac{\pi}{\Delta\tau}, \delta\omega = \frac{2\pi}{\tau_{max}} \tag{3}$$

where $\Delta\tau$ is the delay step size and $\tau_{max}$ is the maximum delay. For applying the Fourier transform $I(\tau)$, has to be sampled in regular intervals with a fixed step size.

The inventive application of BAS is a probabilistic model that relates the measured interferogram to the underlying spectrum. The measured signal for a given delay $\tau$ is expressed as:

$$F(\tau) = 2 \int_{-\infty}^{\infty} S(\omega)[1 + \cos(\omega\tau)]Q(\omega)d\omega + n(\tau) \tag{4}$$

where $S(\omega)$ is the spectrum to be estimated, $Q(\omega)$ represents the spectral efficiency of the detector, and $n(\tau)$ is additive noise. Consideration of the additive noise is an optional feature of the inventive reconstruction. Depending on the application the n-term can be neglected.

This formulation generalizes the traditional FTS equation by explicitly including the detector efficiency $Q(\omega)$ and the noise term $n(\tau)$. This can be expressed as a linear system:

$$F = RS + n \tag{5}$$

where $F$ is the vector of measured intensities (measured sensor data), Yis the discretized spectrum, $R$ is the spectral system matrix with elements $R_{ij} = [1 + \cos(\omega_i\tau_j)]Q(\omega_i)$, and $n$ is the noise vector.

Bayesian Inference Framework

BAS employs a Bayesian inference framework to estimate the spectrum. The inventive key idea is to treat the spectrum $S(\omega)$ as a random variable and update assumptions (beliefs) about it as measurements are collected. This is formalized using Bayes' theorem:

$$p(S|F) = \frac{p(F|S)p(S)}{p(F)} \tag{6}$$

where $p(S|F)$ is the posterior probability of the spectrum given the measurements, $p(F|S)$ is the likelihood of the measurements given the spectrum, $p(S)$ is the prior probability of the spectrum, and $p(F)$ is the evidence (a normalization factor that is not needed to infer anything about $S$).

Practically, the spectrum data reconstruction method is directed on calculating the moments of this distribution, specifically the mean estimate $\mu_S^{posterior}$, which represents the most probable spectrum is, and the covariance $\Sigma_S^{posterior}$, which represents the uncertainty and how this uncertainty correlates between different spectral channels.

Updating scheme

To derive practical update equations, preferably Gaussian assumptions for both the prior and likelihood distributions may be made. It is assumed that the prior distribution of the spectrum is Gaussian with mean $\mu_S^{prior}$ and covariance $\Sigma_S^{prior}$:

$$p(S) = \mathcal{N}(\mu_S^{\text{prior}}, \Sigma_S^{\text{prior}}) \tag{7}$$

Similarly, it is assumed that the likelihood is Gaussian, with the measurements $F$ normally distributed around $RS$ (our model's prediction) with covariance $\Sigma_F$:

$$p(F|S) = \mathcal{N}(RS, \Sigma_F) \tag{8}$$

The inventors employ a key property of Gaussian distributions according to which the product of two Gaussians is also Gaussian. Given that both the prior and likelihood are Gaussian, the posterior distribution $p(S|F)$ will also be Gaussian. This property can be leveraged to derive update equations, as follows.

Generally, the product of two Gaussian distributions $\mathcal{N}(a, A)$ and $\mathcal{N}(b, B)$ is proportional to a new Gaussian $\mathcal{N}(c, C)$, where:

$$C^{-1} = A^{-1} + B^{-1} \tag{9}$$

$$c = C(A^{-1}a + B^{-1}b) \tag{10}$$

Applying this to the inventive spectrum data reconstruction, $A^{-1}$ can be identified with $(\Sigma S^{prior})^{-1}$, $B^{-1}$ with $R^T(\Sigma_F)^{-1}R$, $a$ with $\mu_S^{prior}$, and $b$ with $R^T(\Sigma_F)^{-1}F$. This leads directly to the update equations:

$$\Sigma_S^{\text{new}} = ((\Sigma_S^{\text{prior}})^{-1} + R^T(\Sigma_F)^{-1}R)^{-1} \tag{11}$$

$$\mu_S^{\text{new}} = \Sigma_S^{\text{new}}((\Sigma_S^{\text{prior}})^{-1}\mu_S^{\text{prior}} + R^T(\Sigma_F)^{-1}F) \tag{12}$$

These equations can be rearranged to the more familiar Kalman filter form:

$$\mu_S^{\text{new}} = \mu_S^{\text{prior}} + K(F - R\mu_S^{\text{prior}}) \tag{13}$$

$$\Sigma_S^{\text{new}} = (I - KR)\Sigma_S^{\text{prior}} \tag{14}$$

where $K$, known as the Kalman gain, is given by:

$$K = \Sigma_S^{\text{prior}}R^T(R\Sigma_S^{\text{prior}}R^T + \Sigma_F)^{-1} \tag{15}$$

These update equations provide a mechanism to optimally combine prior beliefs about the spectrum with new measurement information.

Note that this mathematical formulation does not require measurements at evenly spaced delays but allows arbitrary ones. The Kalman gain $K$ determines how much it should be trusted the new measurement versus the prior belief. When the measurement noise $\Sigma_F$ is large compared to the prior uncertainty $\Sigma_S^{prior}$, $K$ will be small, and it will be trusted the prior more. Conversely, when $\Sigma_F$ is small compared to $\Sigma_S^{prior}$, $K$ will be large, and it will be trusted the new measurement more. In this case the prior can be considered as uninformative, as the measurements dominate the estimate. In this limit $K \to R^{-1}$ and thus

$$\mu_S^{\text{new}} = R^{-1}F \tag{16}$$

Importantly, in the case of Nyquist sampling this is equivalent to the FFT solution used in FTS. This means the update equation for the mean can be rewritten as

$$\mu_S^{\text{new}} = \mu_S^{\text{prior}} + KR(\mu_S^{\text{FFT}} - \mu_S^{\text{prior}}) \tag{17}$$

This form allows for an informed estimate to be calculated from a regular FTS reconstruction with knowledge of only the measured delays (which are encoded in $R$) but not the intensity values $F$.

Further, it is noted, that the individual steps of the invention (in particular updates, information gain calculation, etc., see below) can also be implemented using distributions other than Gaussian distributions. In these cases, mean estimates and covariances may be numerically approximated (e.g., with methods like Markov Chain Monte Carlo (MCMC), Laplace approximation, variational inference, or approximate Bayesian computation).

Incorporation of prior knowledge

The Bayesian framework allows for natural incorporation of prior knowledge about the spectrum. This prior knowledge can come from physical constraints, e.g., spectral information on the source of the measuring light source and/or spectral information on the photosensor device, previous measurements, and/or theoretical models. It is encoded in the initial mean $\mu_S{}^{prior}$ and covariance $\Sigma_S{}^{prior}$. E.g., the prior covariance could encode correlations between spectral components which amount to a certain "smoothness" of the spectrum. The information encoded in the prior provides a form of regularization on the solution. This makes the spectral estimate more robust to noise, as it combines the information from the measurements with our prior knowledge about the spectrum's properties.

However, a rigorous framework may be preferred to ensure that prior information does not lead to biases that deteriorate performance. The challenge lies in selecting or averaging over a set of candidate priors (henceforth called prior models) in a way that optimizes the spectral reconstruction while avoiding overfitting.

The orthodox Bayesian approach would consider a continuous distribution over possible prior models and marginalize them:

$$p(S|F) = \int \; p(S|F,M)p(M|F)dM \tag{18}$$

where $S$ is the spectrum, $F$ is the data, and $M$ represents a prior model. However, this integral may be intractable to calculate analytically and computationally expensive to approximate using methods such as Markov Chain Monte Carlo (MCMC).

If applicable, to make the problem tractable, a discrete set of candidate prior models $\{M_1, M_2, ..., M_K\}$ is considered. While not strictly Bayesian, this approach is well motivated by practical considerations and computational feasibility. One might consider calculating $p(M_k|F)$, which, for a uniform prior over models, would be proportional to the evidence $p(F|M_k)$. However, in the jointly Gaussian and linear inference case of the invention, this approach could favor the most uninformative prior and potentially overfit to the data.

To mitigate overfitting, assessing prior models using LeaveOne-Out Cross-Validation (LOO-CV) as a measure of predictive accuracy may be employed in advantageous manner. The LOO-CV score for a given prior model $M_k$ is calculated as follows:

$$\text{LOO-CV}(M_k) = \frac{1}{n}\sum_{i=1}^{n} -\log \int \; p(F_i|S,M_k)p(S|F_{-i},M_k)dS \tag{19}$$

where $F_i$ is the $i$-th data point, $F_{-i}$ represents all data points except the $i$-th, and we marginalize over the signal $S$. This integration over $S$ is crucial as it accounts for the uncertainty in the signal estimation given the prior model and the data.

To weigh the prior models, using a softmax function with a temperature parameter is proposed:

$$w_k = \frac{\exp(-L_k/T)}{\sum_{j=1}^{K} \exp(-L_j/T)} \tag{20}$$

where $L_k$ is the LOO-CV score for prior model $M_k$, and $T$ is a temperature parameter. This approach, while not standard in Bayesian analysis, offers a flexible and intuitive way to balance between prior model selection and prior model averaging. As $T \to 0$, the weights approach a hard selection of the best-performing prior model, while higher values of $T$ lead to more uniform weighting across prior models.

The set of candidate prior models may be constructed from priors inferred from previously seen or measured spectra, as well as an uninformative prior to maintain the limiting case of traditional Fourier transform spectroscopy. This combination has the advantage that the method can leverage prior information when available while still performing robustly in novel scenarios.

Prior model averaging, a more orthodox Bayesian approach, can be performed as:

$$p(S|F) = \sum_{k=1}^{K} w_k p(S|F,M_k) \tag{21}$$

While prior model averaging can provide more robust predictions by incorporating uncertainty in model selection, it may not fully represent the continuous integral over "prior model space" that a true Bayesian approach would consider. The choice between averaging and selection may depend on the specific application and the diversity of the candidate prior model set.

In conclusion, the inventive framework provides an advantageous pragmatic approach to incorporating prior information in spectral reconstruction. By selecting and weighting a set of candidate prior models based on predictive accuracy, the strengths of Bayesian inference can be leveraged while mitigating the risks of overfitting and bias. This adaptive prior selection and averaging process ensures that the method can leverage prior information when it is beneficial while maintaining robustness against potentially biased or overly restrictive priors. It provides a data-driven mechanism to balance the influence of different prior models, allowing the method to adapt to the specific characteristics of each spectroscopic measurement scenario.

Information-Theoretic Sampling Optimization

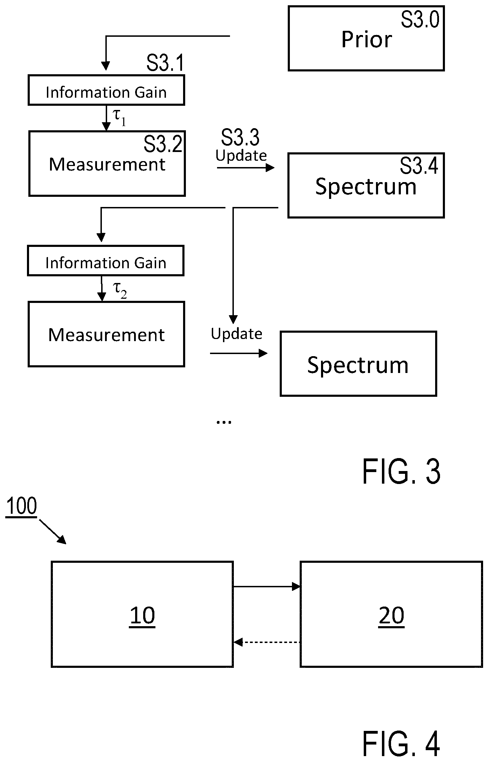

A key advantage of BAS is its ability to optimize sampling strategies based on information theory. In traditional FTS, measurements are typically taken at uniform intervals determined by the Nyquist-Shannon sampling theorem. BAS, however, allows for non-uniform sampling by quantifying the information content of each potential measurement, as described in the following with reference to Figure 3.

The information gain from a new measurement may be quantified using the concept of differential entropy. For a multivariate Gaussian distribution, the differential entropy is given by:

$$H(X) = \frac{1}{2}\log((2\pi e)^n |\Sigma|) \qquad (22)$$

where $n$ is the dimensionality of the distribution and $|\Sigma|$ is the determinant of the covariance matrix.

The information gain from a new measurement is then defined as the reduction in entropy:

$$\text{Information Gain} = H(\text{prior}) - H(\text{posterior}) \qquad (23)$$

This can be computed as:

$$\text{Information Gain} = \frac{1}{2}\left(\log(\det(S)) - \log(\det(\Sigma_F))\right) \qquad (24)$$

where $S = R\Sigma_S R^T + \Sigma_F$ is the predicted measurement covariance.

This formulation allows for the selection of measurement delays that maximize information gain. The next measurement delay $\tau$ can be chosen by maximizing the information gain:

$$\tau_{\text{next}} = \underset{\tau}{argmax}(\log(\det(R_\tau \Sigma_S R_\tau^T + \Sigma_F)) - \log(\det(\Sigma_F))) \qquad (25)$$

Advantageously, this adaptive sampling strategy can significantly reduce the number of required measurements for a given spectral resolution, especially when the spectrum contains localized features or when certain spectral regions are of particular interest.

Interestingly, under certain conditions (uniform prior uncertainty, uniform spectral efficiency, and isotropic measurement noise), the optimal sampling strategy according to this information-theoretic criterion recovers the uniform sampling of traditional FTS. Specifically, the maxima of highest information gain occur at multiples of $\pi/\omega_{max}$, which is exactly the Nyquist sampling rate. For bandlimited signals, the optimal sampling rate becomes $\pi/(\omega_U\text{-}\omega_L)$, consistent with bandpass sampling theory.

The BAS framework thus provides a unified treatment of sampling in FTS, encompassing both traditional uniform sampling and more sophisticated adaptive strategies. By explicitly quantifying the information content of each measurement, BAS opens up new possibilities for efficient spectral estimation, particularly in scenarios where measurement time or data storage is at a premium.

Practical embodiment 1: Enhancement of Existing FTS System with Non-Adaptive Sampling

According to a preferred embodiment, the invention may implement Bayesian Autocorrelation Spectroscopy (BAS) as a post-processing enhancement to an existing Fourier Transform Spectroscopy (FTS) system, improving spectral reconstruction without hardware modifications of the FTS system. The FTS system provides an interferometric autocorrelation measurement apparatus 100, including a measuring device 10 with a sensor device and a spectrum data reconstruction apparatus 20 according to an embodiment of the invention, as schematically shown in Figure 4. The measuring device 10 comprises an existing FTS instrument including the sensor device and having raw interferogram data export capability. The spectrum data reconstruction apparatus 20 is a computer unit running a BAS algorithm software implementation of the spectrum data reconstruction method according to an embodiment of the invention. The spectrum data reconstruction apparatus 20 may be integrated in control components of the measuring device 10, i.e., a software implementing the spectral data reconstruction may run in the measuring device 10.

An interferometric autocorrelation measurement method according to an embodiment of the invention comprises the steps of providing a measuring light field, interacting of the measuring light field with a sample to be investigated and measuring sensor data by an interferometric autocorrelation measurement of interferogram data with the measuring device 10 (FTS instrument).

The data collection of the measuring step comprises collecting interferogram data using standard uniform sampling (sampling with uniform delay steps), recording delay values for each data point and storing instrument parameters, like in particular spectral range, resolution, and detector efficiency curve. Subsequently, a data preprocessing is executed, including an import of raw interferogram data and delay values, applying standard FTS corrections (e.g., phase correction, baseline removal) and constructing a spectral system matrix R using delay values and detector efficiency.

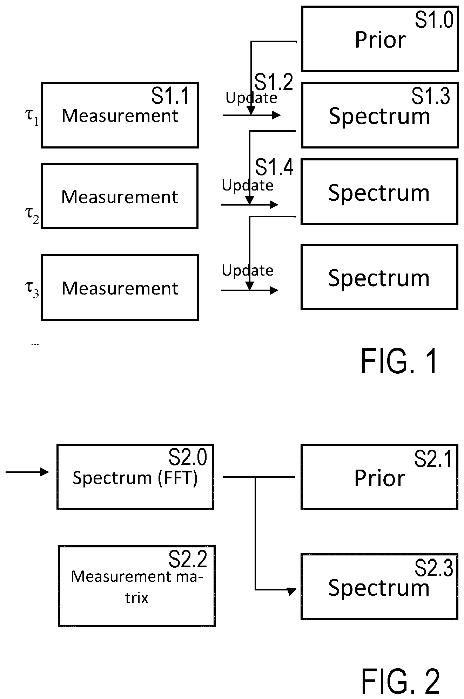

For providing an initial prior estimate $\mu_S^{prior}$ and an initial prior covariance $\Sigma_S^{prior}$ of the spectrum data (step S1.0 in Figure 1 or step S2.1 in Figure 2)), a prior model construction is implemented as follows.

Candidate prior models are defined based on a database of relevant spectra of at least one comparable sample (expected to have similar spectral properties like the sample to be investigated), previously measured spectra of similar samples, known light source characteristics for absorption experiments, and/or general knowledge about spectral correlations. Furthermore, the prior model construction may include providing an uninformative prior for comparison and/or implementing a Leave-One-OutCross-Validation (LOO-CV) for prior model evaluation.

The subsequent spectral reconstruction may be executed according to one of the following options, including a sequential updating (option A, see Figure 1) or a one-step process using FFT reconstruction (option B, see Figure 2).

According to option A (sequential updating), $\mu_S^{prior}$ and $\Sigma_S^{prior}$ are initialized based on the chosen prior model (step S1.0 in Figure 1). Based on the priors, the updated estimates are calculated for each measurement point (steps 51.1 and S1.2 in Figure 1) based on equations (13) and (14) according to:

$$\text{Update } \mu_S^{\text{new}} = \mu_S^{\text{prior}} + K(F - R\mu_S^{\text{prior}})$$

$$\text{Update } \Sigma_S^{\text{new}} = (I - KR)\Sigma_S^{\text{prior}}$$

For the next iteration, the estimates of the first calculation are set according to $\mu_S^{\text{prior}} = \mu_S^{\text{new}}$ and $\Sigma_S^{\text{prior}} = \Sigma_S^{\text{new}}$ as the updated prior input for the next calculation (step S1.4 in Figure 1).

The updating iterations are terminated and final reconstruction is output based on a testing (evaluating) of a predefined stopping condition (comprising e.g., a predefined uncertainty threshold and/or a predefined maximum number of measurement or delay applied). If the stopping condition is fulfilled, a final BAS update is performed and a final spectral estimate with uncertainty bounds is generated and output.

According to option B (One-step process using FFT reconstruction), a standard Fourier transform is executed at first (step S2.0 in Figure 2) to obtain a Fourier estimate $\mu_S^{FFT}$ of the spectral data. Using the Fourier estimate and the priors (step S2.1 in Figure 2) and the spectral system matrix (step S2.2 in Figure 2), updated estimates of the spectral data are obtained (step S2.3 in Figure 2, see equation (17)) by

$$\text{calculating } \mu_S^{\text{new}} = \mu_S^{\text{prior}} + KR(\mu_S^{\text{FFT}} - \mu_S^{\text{prior}})$$

$$\text{and updating } \Sigma_S^{\text{new}} = (I - KR)\Sigma_S^{\text{prior}}$$

Prior model averaging is provided by calculating weights for each prior model based on LOO-CV scores and computing weighted average of spectral estimates from different prior models.

Finally, uncertainty is quantified by extracting uncertainty estimates from diagonal elements of $\Sigma_S^{new}$, and the final spectral estimate with uncertainty bounds are presented as output of the spectrum data reconstruction method.

Practical embodiment 2: Adaptive Sampling FTS System

According to a further preferred embodiment, an FTS instrument design is employed, which incorporates real-time adaptive sampling based on the BAS framework, wherein optimal delay values are dynamically selected to maximize information gain, as illustrated in Figure 3.

Again, the FTS system provides an interferometric autocorrelation measurement apparatus 100, including a measuring device 10 with a sensor device and a spectrum data reconstruction apparatus 20 according to an embodiment of the invention, as schematically shown in Figure 4. Preferably, the measuring device 10 is an interferometer FTS instrument which is adapted with a precision delay control. The sensor device preferably may comprise a high-speed, low-noise detector. Furthermore, the measuring device 10 and/or the spectrum data reconstruction apparatus 20 includes a real-time control system for rapid data processing and decision making. The spectrum data reconstruction apparatus 20 is a computer unit running a BAS algorithm software implementation of the spectrum data reconstruction method according to the embodiment of the invention, including the adaptive sampling optimization.

Furthermore, as noted above, the interferometric autocorrelation measurement method according to an embodiment of the invention comprises the steps of providing a measuring light field, interacting of the measuring light field with a sample to be investigated and measuring sensor data by an interferometric autocorrelation measurement of interferogram data with the measuring device 10 (FTS instrument). However, in this case the sensor data are not measured with fixed delays, but with adaptively changed delays set as follows.

Firstly, a system initialization is implemented, including defining a spectral range of interest and initial spectral resolution target of interest. This may be done on the basis of prior knowledge on the sample and the measuring device, in particular a measuring light source and a photosensor device thereof. The spectral range of interest and the spectral resolution target of interest are related to the delay and interval of delay variation as described in the European patent application EP 24198926.8 ("Optical imaging apparatus and spectral imaging method for creating spectrally and spatially resolved image data", not published on the priority day of the present specification).

Prior models ($\mu_S{}^{prior}$, $\Sigma_S{}^{prior}$) are initialized based on available information or uninformative prior, and an initial delay is set to zero (step S3.0 in Figure 3).

On the basis of the system initialization, an adaptive sampling and real-time processing loop is implemented as follows.

Firstly, information gain for potential delay values using current optimal estimate is calculated (step S3.1 in Figure 3) according to

$$\text{Information Gain} = \frac{1}{2}\left(\log(det(R_\tau \Sigma_S R_\tau^T + \Sigma_F)) - \log(det(\Sigma_F))\right) \qquad (26)$$

The delay value $\tau_{next}$ is selected, which provides maximizing the information gain. The measuring device 10, e.g., the path length difference in an interferometer of an FTIR setup, is adjusted to the selected delay $\tau_{next}$. and the measurement (step S3.2 in Figure 3) is acquired at the selected delay $\tau_{next}$.

On the basis of the current measurement, the spectral estimate and uncertainty are updated (step S3.3 in Figure 3) using the BAS equations for calculating the spectral data (step S3.4 in Figure 3) as mentioned above with reference to option A of embodiment 1. Furthermore, the spectral system matrix R is continuously updated based on actual delay values.

Subsequently, weights are recalculated for each prior model based on updated LOO-CV scores, and weighted average of spectral estimates are computed from different prior models. The updated weighted average is used for the next information gain calculation.

As noted above, the termination and final reconstruction is based on the predefined stopping condition (comprising e.g., a predefined uncertainty threshold and/or a predefined maximum number of measurement or delay applied).

The features of the invention disclosed in the above description, the drawings and the claims can be of significance both individually as well as in combination or sub-combination for the realization of the invention in its various embodiments. The invention is not restricted to the preferred embodiments described above. Rather a plurality of variants and derivatives is possible which also use the inventive concept and therefore fall within the scope of protection. In addition, the invention also claims protection for the subject and features of the subclaims independently of the features and claims to which they refer.

**Claims**

1.  Spectrum data reconstruction method for reconstructing spectrally resolved spectrum data (S) of a measuring light field from sensor data ($F_\tau$) provided by an interferometric autocorrelation measurement of interferogram data created by pairwise superimposing delayed versions of the measuring light field, said delayed versions of the measuring light field having different mutual delays ($\tau$),

**characterized by** the steps of

- providing a spectral system matrix ($R_{\tau\omega}$), wherein the sensor data ($F_\tau$) are determined by applying the spectral system matrix ($R_{\tau\omega}$) to the spectrum data ($S_\omega$) to be obtained, said spectral system matrix ($R_{\tau\omega}$) being created in dependency on the delays ($\tau$) and instrument parameters of an spectrometer apparatus employed for the interferometric autocorrelation measurement,

- providing an initial prior estimate ( $\mu_S^{prior}$ ) and an initial prior covariance ( $\Sigma_S^{prior}$ ) of the spectrum data (S),

- calculating a mean estimate ($\mu_S$) and a covariance ($\Sigma_S$ ) of the spectrum data ($S_\omega$) by applying a Bayesian inference computation employing the sensor data ($F_\tau$), the spectral system matrix ($R_{\tau\omega}$), the initial prior estimate ( $\mu_S^{prior}$ ) the initial prior covariance ( $\Sigma_S^{prior}$ ) and the initial prior covariance ( $\Sigma_S^{prior}$ ), and

- output of the mean estimate ($\mu_S$) and optionally the covariance ($\Sigma_S$ ) of the spectrum data ($S_\omega$) as the spectrum data (S) to be reconstructed.

2. Spectrum data reconstruction method according to claim 1, including further steps of

- repeatedly calculating an updated mean estimate ($\mu_S$) and an updated covariance ($\Sigma_S$ ) of the spectrum data ($S_\omega$) by applying the Bayesian inference computation, wherein for each update calculation a previously calculated mean estimate ($\mu_S$) and covariance ($\Sigma_S$ ) of the spectrum data ($S_\omega$) are employed as a current prior estimate ( $\mu_S^{prior}$ ) and a current prior covariance ( $\Sigma_S^{prior}$ ), and

- after termination of the repeatedly updating steps, output of the updated mean estimate ($\mu_S$) and optionally the updated covariance ($\Sigma_S$ ) of the spectrum data ($S_\omega$) as the spectrum data (S) to be reconstructed.

3. Spectrum data reconstruction method according to one of the foregoing claims, including further steps of

- calculating multiple values of an information gain for potential delay values using the calculated covariance ($\Sigma_S$ ) of the spectrum data ($S_\omega$), and

- output of a selected delay value ($\tau_{next}$) which provides a maximum value of the information gain.

4. Spectrum data reconstruction method according to claim 1, including a further step of

- calculating a Fourier transform of the sensor data ($F_\tau$) for obtaining a Fourier estimate ( $\mu_S^{Fourier}$ ) of the spectrum data ($S_\omega$), wherein

- the mean estimate ($\mu_S$) of the spectrum data ($S_\omega$) is calculated by applying the Bayesian inference computation further employing the Fourier estimate ( $\mu_S^{Fourier}$ ).

5. Spectrum data reconstruction method according to one of the foregoing claims, wherein

- the initial prior estimate ( $\mu_S^{prior}$ ) and the initial prior covariance ( $\Sigma_S^{prior}$ ) are provided based on at least one of a reference database of relevant spectra, data of previously measured spectra, e.g., of similar samples, and measuring light source characteristics, e.g., for absorption experiments.

6. Spectrum data reconstruction method according to one of the foregoing claims, wherein the step of providing the initial prior estimate ( $\mu_S^{prior}$ ) includes

- providing multiple different model prior estimates ( $\mu_{model}^{prior}$ ), and

- a step of prior model averaging the model prior estimates ( $\mu_{model}^{prior}$ ), comprising at least one of calculating weights for each model prior estimate ( $\mu_{model}^{prior}$ ) based on a Leave-One-Out Cross-Validation (LOO-CV) score, and calculating weighted average of spectral estimates from the model prior estimates ( $\mu_{model}^{prior}$ ).

7. Spectrum data reconstruction method according to one of the foregoing claims, wherein

   - the sensor data ($F_\tau$) comprise spatially resolved sensor data measured with multiple sensor elements (pixels) of a two-dimensional photosensor, and
   - the spectrally resolved spectrum data (S) are separately reconstructed for each of the sensor elements.

8. Interferometric autocorrelation measurement method, comprising the steps of

   - providing a measuring light field,
   - measuring sensor data ($F_\tau$) by an interferometric autocorrelation measurement of interferogram data created by pairwise superimposing delayed versions of the measuring light field, said delayed versions of the light field having different mutual delays ($\tau$), and
   - applying the spectrum data reconstruction method according to one of the foregoing claims to the sensor data ($F_\tau$).

9. Interferometric autocorrelation measurement method according to claim 8, wherein the spectrum data reconstruction method according to claim 3 is employed, including the steps of

   - calculating the multiple values of the information gain for potential delay values using the calculated covariance ($\Sigma_S$) of the spectrum data ($S_\omega$),
   - employing the selected delay value ($\tau_{next}$) which provides the maximum value of the information gain, for measuring subsequent sensor data ($F_\tau$).

10. Spectrum data reconstruction apparatus being configured for reconstructing spectrally resolved spectrum data (S) of a measuring light field from sensor data ($F_\tau$) provided by an interferometric autocorrelation measurement of interferogram data created by pairwise superimposing delayed versions of the measuring light field, said delayed versions of the measuring light field having different mutual delays ($\tau$),
    **characterized by** a data processing device being configured for

    - providing a spectral system matrix ($R_{\tau\omega}$), wherein the sensor data ($F_\tau$) are determined by applying the spectral system matrix ($R_{\tau\omega}$) to the spectrum data ($S_\omega$) to be obtained, said spectral system matrix ($R_{\tau\omega}$) being created in dependency on the delays ($\tau$) and instrument parameters of an spectrometer apparatus employed for the interferometric autocorrelation measurement,
    - providing an initial prior estimate ( $\mu_S^{prior}$ ) and an initial prior covariance ( $\Sigma_S^{prior}$ ) of the spectrum data (S),
    - calculating a mean estimate ($\mu_S$) and a covariance ($\Sigma_S$) of the spectrum data ($S_\omega$) by applying a Bayesian inference computation employing the sensor data ($F_\tau$), the spectral system matrix ($R_{\tau\omega}$), the initial prior estimate ( $\mu_S^{prior}$ ) the initial prior covariance ( $\Sigma_S^{prior}$ ) and the initial prior covariance ( $\Sigma_S^{prior}$ ), and
    - output of the mean estimate ($\mu_S$) and optionally the covariance ($\Sigma_S$) of the spectrum data ($S_\omega$) as the spectrum data (S) to be reconstructed.

11. Interferometric autocorrelation measurement apparatus (100) being configured for measuring spectrally resolved spectrum data (S) of a measuring light field, comprising

    - a measuring device (10) including a sensor device being arranged for providing sensor data ($F\tau$) provided by an interferometric autocorrelation measurement of interferogram data created by pairwise superimposing delayed versions of the measuring light field, said delayed versions of the measuring light field having different mutual delays ($\tau$), and
    - the spectrum data reconstruction apparatus (20) according to claim 10.

12. Computer-implemented device programmed to perform the method according to one of the claims 1 to 7.

13. Computer program product which, when loaded into a computer-implemented device, executes the method according to one of claims 1 to 7.

FIG. 1

FIG. 2

FIG. 3

FIG. 4

Europäisches
Patentamt

European
Patent Office

Office européen
des brevets

# EUROPEAN SEARCH REPORT

Application Number

EP 24 19 8973

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JOUNI MOHAMAD ET AL: "Model-Based Spectral Reconstruction Of Interferometric Acquisitions", ICASSP 2023 - 2023 IEEE INTERNATIONAL CONFERENCE ON ACOUSTICS, SPEECH AND SIGNAL PROCESSING (ICASSP), IEEE, 4 June 2023 (2023-06-04), pages 1-5, XP034449915, DOI: 10.1109/ICASSP49357.2023.10096543 [retrieved on 2023-05-05] | 1,2,4,5, 7,8, 10-13 | INV. G01J3/45 G01J3/28 G01J3/453 |
| A | * sections 1, 2.1, 2.3; figure 4 * | 3,6,9 | |
| X | TOBAR FELIPE: "Bayesian Nonparametric Spectral Estimation", ADVANCES IN NEURAL INFORMATION PROCESSING SYSTEMS 31 (2018), 1 January 2018 (2018-01-01), pages 1-11, XP093252797, * Introduction, section 4.1-4.3 * | 1,10,12, 13 | |
| A | SCHMUCK STEFAN ET AL: "Fourier Spectroscopy: A Bayesian Way", INTERNATIONAL JOURNAL OF SPECTROSCOPY, vol. 2017, 31 October 2017 (2017-10-31), pages 1-29, XP093251346, ISSN: 1687-9449, DOI: 10.1155/2017/9265084 Retrieved from the Internet: URL:http://downloads.hindawi.com/archive/2017/9265084.xml> * the whole document * | 1-13 | **TECHNICAL FIELDS SEARCHED (IPC)** G01J |

The present search report has been drawn up for all claims

| Place of search | Date of completion of the search | Examiner |
|---|---|---|
| Munich | 21 February 2025 | Hambach, Dirk |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.......................................................................................................

& : member of the same patent family, corresponding
    document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 24198926

**Non-patent literature cited in the description**

- **P. JACQUINOT**. New developments in interference spectroscopy. *Reports on Progress in Physics*, 1960, vol. 23 (1), 267
- **CLAUDE E. SHANNON**. Communication in the presence of noise. *Proceedings of the IRE*, 1949, vol. 37 (1), 10-21
- The theory of infrared sensitivities and its application to investigations of stellar radiation in the near infrared. **P. FELLGETT**. Ph. D. thesis. Univ. of Cambridge, 1958
- **P. JACQUINOT**. New developments in interference spectroscopy. *Reports on Progress in Physics*, 1954, vol. 23 (1), 267
- **PETER R. GRIFFITHS et al.** Fourier transform infrared spectrometry. John Wiley & Sons, 2007
- **SIEGFRIED WARTEWIG et al.** Ir and raman spectroscopy: fundamental processing. *Advanced drug delivery reviews*, 2005, vol. 57 (8), 1144-1170
- **DAVID WT GRIFFITH et al.** Ftir remote sensing of biomass burning emissions of co2, co, ch4, ch2o, no, no2, nh3, and n2o. *Global biomass burning: Atmospheric, climatic, and biospheric implications*, 2012, 230-239
- **MATTHEW J BAKER et al.** Using fourier transform ir spectroscopy to analyze biological materials. *Nature protocols*, 2014, vol. 9 (8), 1771-1791
- **DAVID A NAYLOR et al.** Interpolation of aliased spectra. *Optics express*, 2007, vol. 15 (20), 12941-12957
- **EDWIN T JAYNES et al.** Probability theory: The logic of science. Cambridge university press, 2003
- **DEVINDERJIT SIVIA et al.** Data analysis: a Bayesian tutorial. *OUP Oxford*, 2006
- **PHIL GREGORY**. Bayesian logical data analysis for the physical sciences: a comparative approach with Mathematica® support. Cambridge University Press, 2005
- **STEFAN SCHMUCK et al.** Fourier spectroscopy: A Bayesian way. *International Journal of Spectroscopy*, 2017, vol. 2017, 1-29